# FASCICULE DE BREVET EUROPEEN

(11) **EP 1 016 023 B1**
(45) Date de publication et mention de la délivrance du brevet: **09.04.2003**
(21) Numéro de dépôt: 98904217.1
(22) Date de dépôt: 26.01.1998
(51) Int. Cl.: G06K 7/00, G06K 7/10

(54) **PROCEDE DE GESTION DES COLLISIONS DANS UN SYSTEME D'ECHANGE DE DONNEES SANS CONTACT**
VERFAHREN ZUM MANAGEN VON KOLLISIONEN IN EINEM KONTAKTLOSEN DATENAUSTAUSCHSYSTEM
METHOD FOR MANAGING COLLISIONS IN A CONTACTLESS DATA EXCHANGING SYSTEM

(30) Priorité: 03.03.1997 FR 9702501
(43) Date de publication de la demande: 05.07.2000
(73) Titulaire: Régie Autonome des Transports Parisiens RATP, 75006 Paris (FR)
(72) Inventeur: MARDINIAN, Grégory, F-95160 Montmorency (FR); GRIEU, François, F-75012 Paris (FR)
(74) Mandataire: Dupuis-Latour, Dominique
(86) Numéro de dépôt international: FR9800132
(87) Numéro de publication internationale: WO98039725

(56) Documents cités:
- EP-A- 0 553 905
- WO-A-89/05549
- FR-A- 2 736 449
- US-A- 5 266 925

## Description

L'invention concerne la communication sans contact entre un objet portatif et une borne.

L'échange de données sans contact est bien connu ; parmi les applications de cette technique, on trouve - de façon non limitative - le contrôle d'accès et le télépéage, par exemple pour l'accès et le péage des transports en commun.

Dans ce dernier exemple, chaque usager est muni d'un objet portatif du type "carte sans contact" ou "badge sans contact", qui est un objet susceptible d'échanger les informations avec une "borne" fixe en approchant le badge de cette dernière de manière à permettre un couplage mutuel non galvanique ("borne" étant le terme couramment utilisé pour désigner le terminal émetteur/récepteur de données apte à coopérer avec les objets portatifs).

L'invention vise la situation particulière dans laquelle une pluralité de badges peuvent être simultanément présents dans le champ d'action de la borne, et où il n'existe pas de moyen physique, par exemple l'insertion dans une fente, pour isoler l'arrivée d'un objet unique dans ce champ.

Dans la mesure où les signaux émis par les différents badges peuvent se chevaucher entre eux dans le temps, la borne doit être pourvue d'un mécanisme d' "anti-collision" permettant de détecter ces situations et les gérer en provoquant une réémission des signaux par les badges.

Divers algorithmes ont été proposés à cet effet. Par exemple, le EP-A-669 591 se base sur la synchronisation parfaite des réponses des badges présents simultanément dans le champ d'action de la borne, Ceci nécessite cependant que l'on puisse atteindre cette synchronisation, c'est-à-dire que tous les badges puissent émettre un signal en même temps en réponse à un message d'interrogation émis par la borne. En pratique, cette technique impose un mécanisme de réponse intégré en logique câblée dans le badge.

Une telle synchronisation n'est pas toujours possible à obtenir, notamment dans le cas des badges à microprocesseur, dont les temps de réponse ne sont pas prévisibles avec une définition suffisante pour obtenir la synchronisation nécessaire.

Dans ce dernier cas, il a été proposé, par exemple par le FR-A-2 666 187, de définir une trame comptant un nombre relativement élevé de "slots" ou créneaux temporels, la réponse du badge étant émise de manière asynchrone au cours d'un créneau temporel dont la position dans la trame est déterminée par tirage aléatoire ou pseudo-aléatoire à chaque émission. Cette technique résout le problème de l'asynchronisme des badges entre eux et réduit fortement la probabilité de collision, cette probabilité étant d'autant plus faible que le nombre de créneaux temporels par trame est élevé.

Cette technique présente cependant l'inconvénient d'exiger pour être efficace des trames relativement longues, car ces trames doivent comporter un nombre important de créneaux temporels, et outre les créneaux temporels doivent être suffisamment larges pour permettre la transmission de toutes les informations requises, notamment le numéro d'identification complet du badge. Il en résulte un allongement important et systématique de la durée de la transaction et ce, indépendamment du nombre effectif de badges présents dans le champ d'action de la borne (puisque la durée de la trame est indépendante de ce nombre, et qu'elle est aussi longue dans le cas ― le plus fréquent ― où l'on se trouve en présence d'un seul et unique badge que dans celui où le nombre de badges est élevé).

Le EP-A-702 324 propose un autre mécanisme de gestion des collisions qui prévoit, si une collision est détectée, d'envoyer par la borne au badge un avis de collision ; chaque badge, à réception de cet avis de collision, décide d'émettre ou non un message en réponse, cette décision étant de nature aléatoire avec une probabilité de réponse fixe, par exemple de 50 %. Le nombre de réponses reçues par la borne, et donc corrélativement le risque de collision, va ainsi diminuer après détection d'une première collision. Si une ou plusieurs collisions sont encore détectées, le mécanisme est réitéré jusqu'à disparition complète des collisions.

Le EP-A-0 553 905 décrit également un système prévoyant une probalilité de réponse préprogrammée dans chaque badge, une fois pour toutes, et qui ne tient donc pas compte des risques variables de collision lors d'une transaction donnée.

On comprend qu'avec un tel mécanisme, surtout pour un nombre élevé de badges présents dans le champ d'action de la borne, les collisions puissent se reproduire plusieurs fois et le nombre de réitérations puisse être important, ce qui rallonge d'autant le délai nécessaire à l'identification de tous les badges présents.

L'un des buts de l'invention est de résoudre ces différentes difficultés, en proposant un mécanisme de gestion des collisions de type asynchrone - donc parfaitement adapté à des badges à microprocesseur - qui soit aisément adapté au nombre moyen de badges effectivement ou potentiellement présents dans le champ d'action de la borne.

On verra par la suite que ce caractère adaptatif, qui est géré par la borne, peut être aussi bien statique que dynamique. L'adaptation statique consiste à régler α *priori* la borne pour optimiser la durée de l'algorithme anti-collision en fonction du nombre moyen de badges typiquement susceptibles de se trouver dans le champ d'action de la borne. L'adaptation dynamique consiste à modifier les paramètres de l'algorithme au cours d'une même séquence d'identification, d'une itération à la suivante, en fonction du nombre réel de badges présents dans le champ d'action de la borne.

Ces adaptations statique ou dynamique pourront être mises en oeuvre de façon indépendante, ou bien cumulative.

On remarquera par ailleurs que l'optimisation du processus de gestion des collisions (adaptation statique ou dynamique) est contrôlée par la borne et donc indépendante des badges, qui peuvent ainsi être utilisés indifféremment dans des circonstances et dans des environnements très différents.

Ainsi, un même badge pourra être utilisé sans modification de ses réglages propres, aussi bien avec des bornes de type "lecteur mains libres" (par exemple passage dans un portique de contrôle), où l'on peut avoir un nombre élevé de badges présents en même temps dans le. champ d'action de la borne, typiquement jusqu'à 8 à 10 badges simultanément, qu'avec des lecteurs du type à "acte volontaire", c'est-à-dire où l'on demande à l'utilisateur d'approcher son badge d'une zone de lecture de taille réduite, ou de plaquer son badge contre celle-ci, comme par exemple dans les dispositifs de télépéage de transports urbains dans ce dernier cas, le nombre typique de badges susceptibles d'être simultanément présents est bien moindre : proche de 2, très rarement plus de 3).

Le procédé de l'invention est énoncé par la revendication principale.

Les sous-revendications visent formes de mise en oeuvre avantageuses.

D'autres avantages et caractéristiques de l'invention apparaîtront à la lecture d'un exemple de réalisation ci-dessous, en référence aux dessins annexés.

La figure 1 illustre l'algorithme de gestion des collisions, côté borne.

La figure 2 illustre l'algorithme correspondant, côté badge.

La figure 3 est une courbe d'efficacité présentant les résultats obtenus par le procédé de l'invention et la manière d'en optimiser le fonctionnement.

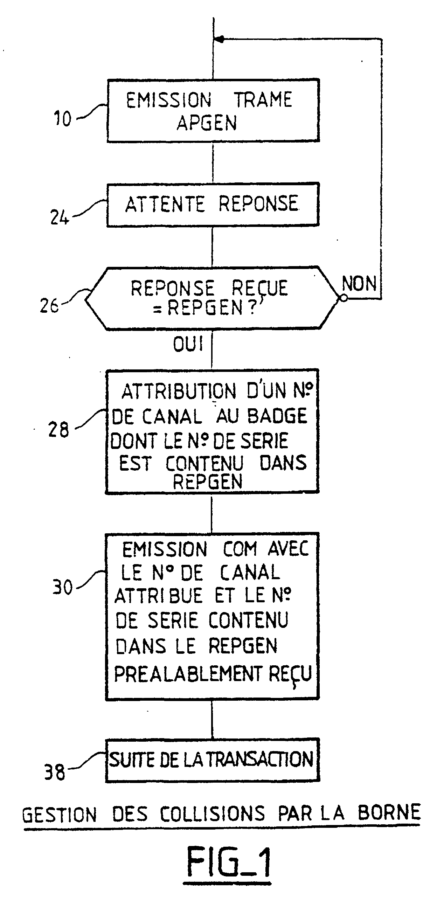

On va maintenant décrire un exemple de mise en oeuvre de l'invention, en référence aux organigrammes des figures 1 (étapes exécutées côté borne) et 2 (étapes exécutées côté badge).

Ces algorithmes correspondent à un premier mode de mise en oeuvre du procédé de gestion des collisions selon l'invention, et on verra par la suite différentes variantes permettant de perfectionner encore ce procédé.

L'invention est basée sur l'utilisation d'un paramètre que l'on appellera par la suite "paramètre de modulation de probabilité" ou PMP, élaboré par la borne, qui servira de valeur d'entrée à un algorithme probabiliste mis en oeuvre par chacun des badges afin de commander de manière aléatoire l'émission ou la non-émission d'un signal en réponse à un message d'interrogation par la borne.

Ce paramètre, qui va donc permettre à la borne de moduler la probabilité de réponse des badges, est un paramètre adaptatif statiquement et/ou dynamiquement. Dans la mise en oeuvre qui va suivre, on considérera uniquement un paramètre adaptatif statiquement, c'est-à-dire un paramètre ajusté en fonction de la géométrie de la borne et de son environnement, ce paramètre étant variable d'une borne à la suivante mais constant au cours du temps (on décrira plus bas, dans les compléments et variantes, le cas d'un paramètre adaptatif dynamiquement au cours du temps).

Très avantageusement, ce PMP comporte deux champs, à savoir un champ contenant une donnée fixe représentatif d'un type d'une borne prédéterminée, et un champ modulateur de probabilité proprement dit.

Le premier champ indique par exemple qu'il s'agit d'une borne de contrôle d'accès à telle zone, d'une borne de télépéage routier, d'une borne de télépéage de transport urbain dans telle ville, etc. La présence de ce champ permet, dans le cas où l'utilisateur dispose d'une pluralité de badges semblables (par exemple plusieurs badges sans contact conservés dans son portefeuille), de discriminer celui des badges correspondant à la transaction recherchée, en empêchant les autres badges de répondre à tort et d'interférer dans la transaction. Dans la suite de la description, on supposera que ce champ est comparé à l'identique à un champ correspondant contenu dans le badge, et qu'il y a bien concordance (c'est-à-dire, par exemple, que la borne interrogatrice est une borne du type "accès au métro parisien" et que le badge est un badge du type "péage du métro parisien") et que, dans tous les autres cas, le badge inhibe systématiquement toute émission d'un message de réponse.

Le mécanisme d'identification des badges par la borne commence par l'émission par cette dernière d'une trame dite "d'appel général" APGEN contenant, entre autre, le PMP défini plus haut.

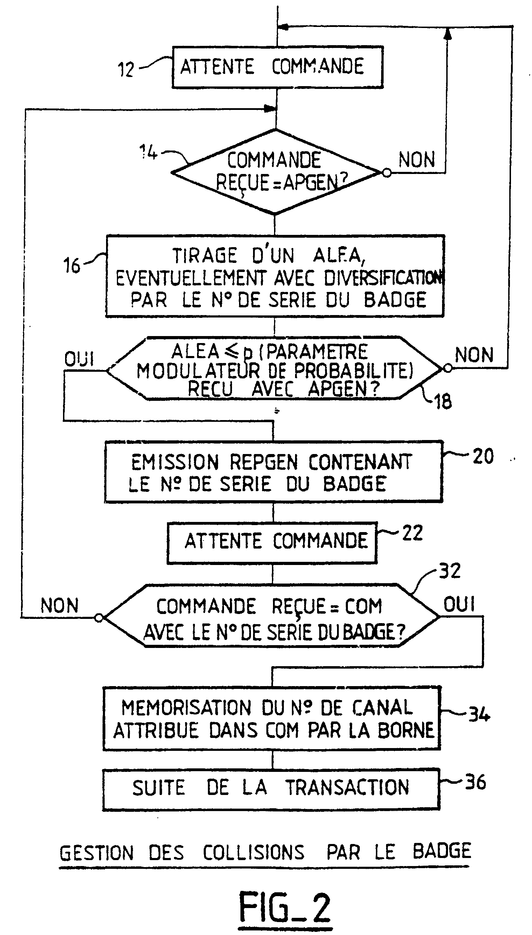

Cette trame APGEN est reçue par les divers badges simultanément dans le champ d'action de la borne. Ces différents badges, qui étaient en position d'attente d'une commande (étape 12, figure 2), s'ils détectent que la trame reçue est bien un appel général APGEN (étape 14, figure 2) vont alors décider, selon un algorithme probabiliste, de répondre ou de ne pas répondre à cet appel.

L'étape correspondante (étape 16, figure 2) comporte le tirage d'un aléa, selon un algorithme classique, éventuellement avec diversification par le numéro de série du badge (ce numéro de série, qui est toujours relativement long, permet en effet d'obtenir un tirage pseudo-aléatoire par des moyens très simples).

Une comparaison est alors opérée (étape 18, figure 2) entre l'aléa ainsi tiré et le PMP inclus dans le message APGEN reçu. Le critère peut être par exemple que l'aléa soit inférieur ou égal à la valeur p du PMP.

Par exemple, si le PMP peut être ajusté sur 64 valeurs différentes (*p* = 0 à *p* = 63), le tirage sera celui d'un nombre compris entre 0 et 63. On voit ainsi que, si l'on règle la valeur du PMP à *p* = 63, la probabilité de réponse sera maximale, à 100 %, tandis que si l'on règle le PMP à *p* = 0, la probabilité de réponse sera 1/64, soit 1,56 %, donc minimale. Le choix de la valeur p du PMP envoyé au badge permet ainsi de moduler entre une valeur minimale et une valeur maximale la probabilité de déclencher une réponse par le badge.

Si un tel message de réponse à l'appel général ou REPGEN est émis (étape 20, figure 2), il contient le numéro de série du badge, qui est un numéro univoque permettant d'identifier de manière certaine le badge en question afin que la borne puisse l'identifier parmi les autres (plus précisément, ce champ contient un numéro de série *stricto sensu* associé à un numéro de constructeur). Le badge se met alors en attente d'un message de commande (étape 22, figure 2).

La borne, qui s'était mise en réception en attente d'une réponse (étape 24, figure 1), lorsqu'elle reçoit une réponse, vérifie formellement (étape 26, figure 1) que cette réponse reçue est bien une réponse du type REPGEN précité. Si tel est le cas, ceci signifie qu'il n'y a pas eu de collision, et que l'on peut donc identifier de façon non équivoque le badge et donc extraire le numéro de série de celui-ci par décodage de la réponse REPGEN reçue.

Dans le cas contraire, la réponse est ignorée et l'algorithme retourne à l'étape 10 pour réitérer l'émission d'un appel général APGEN (avec éventuellement modification du PMP, comme on l'expliquera par la suite). On notera que cette situation peut correspondre soit au cas d'une collision (réponse reçue, mais non conforme), soit au cas d'une absence de réponse ; on verra plus bas que, dans certaines situations, il peut être avantageux de discriminer ces deux cas pour modifier spécifi quement le PMP lors de la réitération de l'appel général APGEN.

En cas de réponse reçue et conforme, la borne attribue (étape 28, figure 1) un numéro de canal au badge dont le numéro de série est contenu dans REPGEN, afin de pouvoir ultérieurement poursuivre l'échange de données de façon simplifiée sur ce canal (le canal étant en fait un identifiant court, typiquement sur un octet, constituant un numéro abrégé pour accélérer l'échange, de sorte que l'émission par la borne de l'identifiant complet de ce badge n'est plus nécessaire). Si l'on se trouve en présence de plusieurs bornes ayant des domaines d'action chevauchants, on fait en sorte que le numéro de canal comporte une identification de la borne traitant la réponse du badge, ceci afin d'identifier de façon univoque cette borne parmi les différentes bornes avec lesquelles le badge peut physiquement communiquer et empêcher qu'un badge ne reçoive des commandes ambiguës.

La borne émet alors un message de commande COM (étape 30, figure 1) contenant le numéro de canal attribué et le numéro de série du badge, c'est-à-dire le numéro contenu dans la réponse REPGEN que l'on vient de recevoir.

À réception d'une telle commande COM (étape 32, figure 2) le badge vérifie la conformité de celle-ci, c'est-à-dire si elle lui est réellement destinée et, dans l'affirmative, mémorise le numéro de canal attribué et transmis dans la commande COM (étape 34, figure 2). La transaction se poursuit alors (étape 36, figure 2), par exemple par transmission d'un accusé de réception positif et de diverses données qui seront ensuite traités par la borne (étape 38, figure 1) de manière en elle-même connue. Le badge, après réception d'une commande "fin", reste ensuite silencieux jusqu'à sa sortie du champ d'action de la borne et/ou expiration d'une durée prédéterminée, par exemple en forçant à zéro la probabilité d'émission d'un REPGEN en réponse à un APGEN ultérieur. On procède ainsi afin de ne pas réitérer l'échange de données en dépit de la réception de messages APGEN ultérieurs émis par la borne, qui continue à solliciter des réponses APGEN des autres badges, ou de badges entrés depuis lors dans son champ d'action.

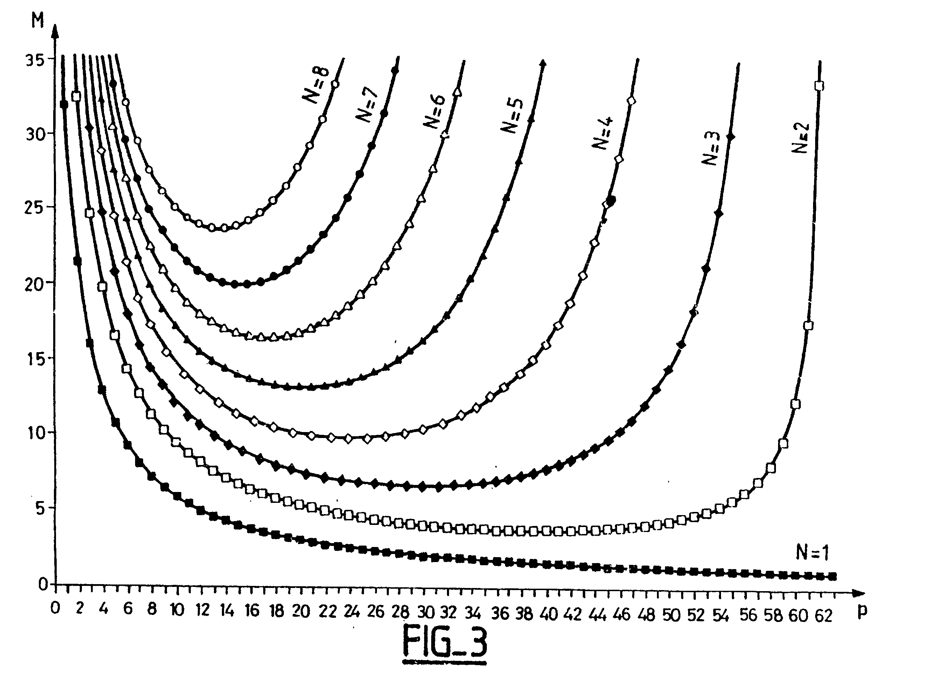

La figure 3 illustre une courbe d'efficacité du mécanisme de gestion des collisions selon l'invention.

Cette figure donne le nombre moyen M de tentatives d'établissement du contact nécessaires (c'est-à-dire le nombre de réitérations de l'algorithme de la figure 1 ou le nombre de trames APGEN successives qu'il est nécessaire d'émettre) pour identifier la totalité des badges présents, en fonction de la valeur p du PMP et du nombre N de badges simultanément présents dans le champ d'action de la borne.

Dans cet exemple, le PMP peut être ajusté entre 0 et 63, conduisant à une probabilité d'émission d'une réponse par le badge de (*p*+1) / 64, c'est-à-dire respectivement comprise entre 1/64 (1,56 %) et 1 (100 %).

Lorsque N = 1, il est bien entendu avantageux de donner à p sa valeur maximale (si p = 63, la probabilité est de 100 %, et M = 1), puisque le risque de collision est nul.

En revanche, pour N > 1, on voit que la valeur optimale de M, qui est le minimum de la caractéristique correspondant au nombre N de badges présents, s'établit à une valeur de p intermédiaire entre 0 et 63, cette valeur intermédiaire optimale décroissant au fur et à mesure qu'augmente le nombre de badges.

On voit également que pour une même valeur p du PMP, le nombre moyen de tentatives nécessaire augmente en fonction du nombre de badges présents. En d'autres termes, le temps nécessaire pour identifier la totalité des badges est d'autant plus faible que le nombre de badges est faible, le système s'adaptant ainsi de lui-même au nombre de badges effectivement présents au même moment.

Divers perfectionnements et variantes peuvent être envisagés.

Ainsi, très avantageusement, on peut prévoir, au lieu d'un PMP dont la valeur *p* est ajustée une fois pour toutes pour une borne donnée (comme dans l'exemple que l'on vient de décrire), de faire varier dynamiquement cette valeur p en fonction des réponses reçues et du nombre plus ou moins grand de collisions détectées.

Plus précisément, la borne comprend des moyens pour discriminer à l'étape 26 (figure 1) le cas de la réception d'une réponse non conforme, révélatrice d'une collision, et celui d'une absence de réponse. Une telle discrimination peut être en pratique opérée, si l'environnement électromagnétique de la borne n'est pas trop perturbé, par un moyen à seuil faisant fonction de détecteur de silence.

Initialement, on donne au PMP la valeur maximale (63 dans l'exemple considéré), soit une probabilité de réponse de 100 %.

Après émission d'un premier appel général APGEN, si l'on détecte une collision, c'est-à-dire si l'on reçoit effectivement une réponse mais que cette réponse n'est pas conforme, la borne fait décroître la valeur p du PMP (par exemple en le divisant par 2), cette décroissance étant limitée par une valeur plancher déduite de la caractéristique d'efficacité de la figure 3.

Un nouvel appel général est émis avec le PMP ainsi diminué, et ainsi de suite.

Inversement, si à la suite d'un appel général APGEN, aucune réponse n'est reçue (absence de badge ou badge en limite de portée), on accroît la valeur p du PMP de manière à augmenter la probabilité de réponse du prochain badge qui pénétrera dans le champ de la borne.

La borne opère ainsi une modulation dynamique du PMP qui réduit la probabilité de réponse au prochain appel général des badges lorsque ceux-ci sont nombreux (collisions détectées) et, inversement, restaure à une valeur élevée cette probabilité après que les badges aient été tous identifiés ou qu'ils aient quitté le champ d'action de la borne.

Dans l'exemple décrit, la probabilité de réponse est fonction linéaire du PMP. Dans une variante avantageuse, si le nombre de badges en collision risque d'être élevé, la probabilité est fonction décroissante du PMP, cette décroissance étant plus rapide qu'une décroissance linéaire, par exemple selon une loi exponentielle. Dans les mêmes circonstances où le nombre de collisions risque d'être élevé, il peut être préférable, à la réception du premier APGEN, que les badges commencent par la probabilité minimale de réponse, pour l'augmenter ensuite en l'absence de collision.

Dans une autre variante, mise en oeuvre cette fois-ci côté badge, le badge mémorise le nombre de trames APGEN qu'il a reçues successivement et auquel il n'a pas répondu par émission d'un message REPGEN, c'est-à-dire en d'autres termes, le nombre de fois où la comparaison de l'étape 18 (figure 2) a donné successivement un résultat négatif. Lorsque le total dépasse un seuil prédéterminé (par exemple dix fois), on force l'émission d'un message REPGEN à la prochaine réception d'un message APGEN, et ceci quelle que soit la valeur de l'aléa tiré suite à la réception de cette commande APGEN. Le compteur de commandes APGEN successives reçues est alors bien entendu remis à zéro.

On assure ainsi que, quelles que soient les circonstances et quelle que soit la valeur du PMP, il y aura toujours émission d'une réponse REPGEN dans un intervalle de temps donné (par exemple onze fois la périodicité des émissions des trames APGEN, dans l'exemple précité) par la totalité des badges simultanément présents dans le champ d'action de la borne.

D'autres variantes encore sont possibles, par exemple où les badges mémorisent des éléments historiques, l'émission d'un signal de réinitialisation par la borne permettant d'assurer une réponse sélective des badges en fonction de l'historique mémorisé, de sorte que certains badges ne répondent pas et/ou que d'autres répondent de façon certaine.

## Revendications

1. Un procédé de gestion des collisions dans un système d'échange de données entre des objets portatifs de type badge, et au moins un terminal d'émission-réception de données de type borne, apte à coopérer avec une pluralité de badges simultanément présents dans le champ d'action de la borne, procédé **caractérisé par** les étapes successives suivantes :
a) émission par la borne, vers ladite pluralité de badges, de messages d'appel général (APGEN) incluant un paramètre de modulation de probabilité (PMP) ;
b) émission conditionnelle par chaque badge de ladite pluralité de badges, vers la borne, d'un message de réponse à l'appel général (REPGEN) ce message étant émis avec une probabilité d'émission inférieure à 100 %, fonction de la valeur du paramètre de modulation de probabilité (PMP) , ce message de réponse à l'appel général (REPGEN) contenant un identifiant propre au badge ;
c) à réception par la borne d'un message de réponse à l'appel général, et en l'absence de collision de ce dernier message avec un message émis par un autre badge de ladite pluralité de badges, établissement d'une liaison de communication de données spécifique entre la borne et le badge ayant émis le message à l'étape b) et poursuite de l'échange de données, et retour à l'étape a) pour une nouvelle itération ;
d) dans le cas contraire, retour à l'étape a) pour une nouvelle itération.

2. Le procédé de la revendication 1, dans lequel la probabilité d'émission d'un message de réponse à l'appel général est modifiée à la nouvelle itération consécutive à l'étape c) ou d).

3. Le procédé de la revendication 2, dans lequel la probabilité d'émission d'un message de réponse à l'appel général est diminuée à la nouvelle itération consécutive à l'étape d) en cas de collision.

4. Le procédé de la revendication 1, dans lequel, au moins dans les itérations, consécutives à l'étape d) en cas de collision, ultérieures à la première émission d'un message d'appel général (APGEN), le paramètre de modulation de probabilité (PMP) est émis par la borne de manière à définir une probabilité inférieure à 100 % d'émission du message de réponse à l'appel général (REPGEN) par les badges susceptibles de répondre.

5. Le procédé de la revendication 4, dans lequel, à réception par un badge du paramètre de modulation de probabilité (PMP), ce badge produit une valeur pseudo-aléatoire et compare cette valeur pseudo-aléatoire au paramètre de modulation de probabilité reçu.

6. Le procédé de la revendication 4, dans lequel :
― le paramètre de modulation de probabilité comprend un premier champ contenant une donnée fixe représentative d'un type de borne prédéterminé, et un second champ contenant une donnée spécifique de modulation de probabilité ;
― à l'étape b), on opère une comparaison préalable de la donnée fixe par rapport à une donnée homologue contenue dans le badge, et
― on ne procède à l'émission conditionnelle de l'étape b) et à l'établissement de la liaison de l'étape c) que si, en outre, la comparaison préalable a donné un résultat concordant.

7. Le procédé de la revendication 1, dans lequel, à l'étape c), l'établissement de la liaison spécifique comporte :
― l'élaboration d'un message de commande (COM) comprenant, d'une part, l'identifiant propre au badge reçu par la borne en réponse à l'appel général et, d'autre part, un numéro univoque de canal de communication ;
― l'émission de ce message de commande de la borne vers le badge ; puis
― la poursuite de l'échange de données sur le canal ainsi attribué.

8. Le procédé de la revendication 7, dans lequel, un badge étant susceptible de se trouver dans les champs d'action simultanés d'une pluralité de bornes, le numéro de canal comporte une donnée propre à la borne ayant établi la liaison avec le badge, cette donnée étant différente entre bornes adjacentes.

9. Le procédé de la revendication 1, dans lequel :
― le paramètre de modulation de probabilité est un paramètre modifiable dynamiquement d'un message d'appel général au suivant,
― la borne comporte des moyens pour opérer, à l'étape d), une discrimination entre, d'une part, absence de réception de message de réponse à l'appel général et, d'autre part, réception d'un message non conforme, notamment en cas de collision entre messages émis par deux badges différents ;
― à l'étape d), en présence d'un message non conforme, le paramètre de modulation de probabilité est modifié, avant retour à l'étape a), dans un sens permettant de diminuer la probabilité d'émission conditionnelle à l'étape b) ultérieure ; et
― à l'étape d), en cas d'absence de réception par la borne d'un message de réponse à l'appel général, le paramètre de modulation de probabilité est modifié, avant retour à l'étape a), dans un sens permettant d'accroître la probabilité d'émission conditionnelle à l'étape b) ultérieure.

10. Le procédé de la revendication 1, dans lequel, après chaque exécution de l'étape b), le badge compte le nombre de non-émissions conditionnelles consécutives produites en réponse à une même série de messages d'appel général émis par la borne, et force l'émission d'un message de réponse à l'appel général lorsque le compte correspondant atteint un seuil prédéterminé, alors même que le protocole défini par le paramètre de modulation de probabilité exige une réponse aléatoire.

## Claims

1. A method of controlling collisions in a system of interchanging data between portable objects of the badge type and at least one data transceiver device of the terminal type suitable for co-operating with a plurality of badges simultaneously present in the field of action of the terminal, which method is **characterized by** the following successive steps:
a) the terminal transmits, to said plurality of badges, general call messages (APGEN) including a collision probability modulation parameter (PMP);
b) each badge of said plurality of badges conditionally transmits, to the terminal, a general call response message (REPGEN), said message being transmitted with a transmission probability of less than 100% as a function of the value taken by the probability modulation parameter (PMP), said general call response message (REPGEN) containing an identifier specific to the badge;
c) on the terminal receiving a general call response message, and in the absence of any collision between the latter message and a message transmitted by another badge of said plurality of badges, a specific data communication link is established between the terminal and the badge which has transmitted the message in step b), and data interchange is continued, returning to step a) for a new iteration; and
d) otherwise, the method returns to step a) for a new iteration.

2. The method of claim 1, in which the probability of a general call response message being transmitted is modified on each new consecutive iteration in step c) or d).

3. The method of claim 2, in which the probability of a general call response message being transmitted is decreased in the event of a collision on the new iteration following step d).

4. The method of claim 1, in which, at least within iterations, following step d) in the event of a collision, subsequent to first transmission of a general call message (APGEN), the probability modulation parameter (PMP) is transmitted by the terminal so as to define a probability of less than 100% for transmission of a general call response message (REPGEN) by each badge likely to reply.

5. The method of claim 4, in which, when a badge receives the probability modulation parameter (PMP), the badge produces a pseudo-random value and compares said pseudo-random value with the received probability modulation parameter.

6. The method of claim 4, in which:
- the probability modulation parameter comprises a first field containing fixed data representative of a predetermined type of terminal, and a second field containing specific data for modulating probability;
- in step b), the fixed data is subjected to prior comparison with corresponding data contained in the badge; and
- the conditional transmission of step b) is performed and the link of step c) is established only if, in addition, the prior comparison has given rise to a matching result.

7. The method of claim 1, in which, in step c), establishing the specific link includes:
- generating a control message (COM) comprising, on the one hand, the identifier specific to the badge as received by the terminal in response to the general call and, on the other hand, an unambiguous communications channel number;
- sending said control message from the terminal to the badge; then
- continuing the data interchange on the channel allocated in this way.

8. The method of claim 7, in which, for a badge that might be found simultaneously in the fields of action of a plurality of terminals, the channel number includes a data item specific to the terminal which has established a link with the badge, said data item differing between adjacent terminals.

9. The method of claim 1, in which:
- the probability modulation parameter is a parameter that is modifiable dynamically from one general call message to the next;
- the terminal includes means operative in step d) to discriminate between, on the one hand, the absence of any general call response message being received and, on the other hand, a non-compliant message being received, particularly in the event of collision between messages transmitted by two different badges;
- in step d), in the presence of a non-compliant message, the probability modulation parameter is modified before returning to step a), with the modification being in a direction that decreases the probability of a conditional transmission in the subsequent step b); and
- in step d), in the absence of the terminal receiving a general call response message, the probability modulation parameter is modified prior to returning to step a) in a direction that increases the probability of a conditional transmission in the subsequent step b).

10. The method of claim 1, in which, after each performing of step b), the badge counts the number of consecutive absences of conditional transmissions produced in response to the same series of general call messages transmitted by the terminal, and forces a response message to be transmitted to the general call whenever the corresponding count has reached a predetermined threshold, even when the protocol defined by the probability modulation parameter requires a random response.

## Patentansprüche

1. Verfabren zum Verwalten der Kollisionen in einem Datenaustauschsystem zwischen tragbares Objekten vom Typ Anstecker und zumindest einem Daten-Sende-Empfangs-Terminal vom Typ Posten, geeignet zum Kooperieren mit einer Mehrzahl von Anstecken, die simultan präsent sind in dem Aktionsfeld des Postens, wobei das Verfahren durch die folgenden sukzessiven Schritte gekennzeichnet ist:
a) Aussenden durch den Posten, hin zu der Mehrzahl von Aasteckern, von Aügemeinruf-Nachrichten (APOEN) inklusive eines Modulationswahrscheinlichkeitsparameters (PMP);
b) bedingtes Aussenden durch jeden Anstecker der Mehrzahl von Ansteckern, hin zu dem Posten einer Antwortnachricht auf den Allgemeinaufruf (REPGEN), wobei die Nachricht mit einer Sendewahrscheinlichkeit gesendet wird, geringer als 100% als Funktion des Wertes des Modulationswahrscheinlichkeitsparameters (PMP), wobei die Antwortnachricht auf den Allgemeinaufruf (REPOEN) einen dem Anstecker eigenen Identifikator aufweist;
c) bei Empfang durch den Posten einer Antwortnachricht auf den Allgemeinaufruf und in Abwesenheit von Kollision der letzteren Nachricht mit einer Nachricht, die durch einen anderen Anstecker der Mehrzahl von Ansteckern ausgesendet wird, Aufbauen einer Datenkommunikationsverbindung, spezifisch zwischen dem Posten und dem Anstecker, der die Nachricht im Schritt b) ausgesendet hat, und Fortsetzen des Datenaustausches und Zurückkehren zum Schritt a) für eine weitere Iteration;
d) andernfalls Rückkehr zu dem Schritt a) für eine weitere Iteration.

2. Verfahren gemäß Anspruch 1, bei welchem die Wahrscheinlichkeit des Aussendens einer Antwortnachricht auf den Allgemeinaufruf modifiziert wird bei der weiteren Iteration nach dem Schritt c) oder d).

3. Verfahren gemäß Anspruch 2, bei welchem die Wahrscheinlichkeit des Aussendens einer Antwortnachricht auf den Allgemeinaufruf verringert wird bei einer weiteren Iteration nach dem Schritt d) im Köllisionsfall.

4. Verfahren gemäß Anspruch 1, bei welchem, zumindest in den Iterationen, nach dem Schritt d) im Kollisionsfall, jenseits der ersten Aussendung einer Allgemeinaufruf-Nachricht (APGEN) der Wahrscheinlichkeitsmodulationsparameter (PMP) ausgesendet wird durch den Posten derart, um eine Wahrscheinlichkeit unter 100% der Aussendung der Antwortnachricht auf den Allgemeinaufruf (REPGEN) durch die zum Antworten geeigneten Anstecker zu definieren.

5. Verfahren gemäß Anspruch 4, bei welchem, bei Empfang durch einen Anstecker des Modulationswahrscheinlichkeitsparameters (PMP), der Anstecker einen Pseudo-Zufallswert produziert und den Pseudo-Zufallswert mit dem empfangenen Modulationswahrscheinlichkeitsparameter vergleicht.

6. Verfahren gemäß Anspruch 4, bei welchem:
- der Modulationswahrscheinlichkeitsparameter ein erstes Feld umfasst mit einem festen Datenwert, der repräsentativ ist für einen vorbestimmten Postentyp, und ein zweites Feld mit einem Datenwert, der spezifisch für eine Modulationswahrscheinlichkeit ist;
- bei Schritt b) Durchführen eines vorherigen Vergleichs des festen Datenwerts in Bezug auf einen entsprechenden Datenwert, der in dem Anstecker enthalten ist, und
- nur Vorrücken zu der bedingten Aussendung des Schritts b) und zu dem Aufbau der Verbindung des Schritts c), wenn des Weiteren der vorherige Vergleich ein übereinstimmendes Resultat ergeben hat.

7. Verfahren gemäß Anspruch 1, bei welchem bei Schritt c) der Aufbau der spezifischen Verbindung umfasst:
- Ausarbeiten einer Befehlsnachricht (COM), die einerseits den dem Anstecker eigenen Identifikator, der durch den Posten in Antwort auf einen Allgemeinaufruf empfangen wird, aufweist, und andererseits eine eindeutige Kommunikationskanalnummer;
- Aussenden der Befehlsnachricht des Postens hin zu dem Anstecker; dann
- Fortsetzung des Datenaustauschs auf dem so zugewiesenen Kanal.

8. Verfahren gemäß Anspruch 7, bei welchem, wenn ein Anstecker geeignet ist, sich in den gleichzeitigen Aktionsfeldern einer Mehrzahl von Posten zu finden, die Kanalnummer einen Datenwert aufweist, der dem Posten eigen ist, welcher die Verbindung mit dem Anstecker aufgebaut hat, wobei dieser Datenwert verschieden ist zwischen benachbarten Posten.

9. Verfahren gemäß Anspruch 1, bei welchem:
- der Modulationswahrscheinlichkeitsparameter ein Parameter ist, der dynamisch von einer Allgemeinaufrufsnachricht zur nächsten modifizierbar ist,
- der Posten Mittel umfasst zum Durchführen, bei Schritt d), einer Unterscheidung zwischen einerseits der Abwesenheit des Antwortnachrichten-Empfangs auf den Allgemeinaufruf und andererseits Empfang einer nicht-konformen Nachricht, insbesondere Kollisionsfall zwischen Nachrichten, die durch zwei verschiedene Anstecker ausgesendet werden;
- bei Schritt d) Vorhandensein einer nicht-konformen Nachricht wird der Modulationswahrscheinlichkeitsparameter modifiziert, vor Rückkehr zu Schritt a) in einem Sinn, der es erlaubt, die Wahrscheinlichkeit der bedingten Aussendung im späteren Schritt b) zu verringern, und
- bei Schritt d) im Fall der Abwesenheit des Empfangs durch den Posten einer Antwortnachricht auf den Allgemeinaufruf wird der Modulationswahrscheinlichkeitsparameter modifiziert vor Rückkehr zum Schritt a) in einem Sinn, der es erlaubt, die Wahrscheinlichkeit der bedingten Aussendung im späteren Schritt b) zu erhöhen.

10. Verfahren gemäß Anspruch 1, bei welchem nach Ausführen des Schritts b) der Anstecker die Anzahl von aufeinanderfolgenden bedingten Nicht-Aussendungen zählt, die in Antwort auf eine gleiche Serie von Allgemeinaufruf-Nachrichten produziert werden, die durch den Posten ausgesendet werden, und die Aussendung einer Antwortnachricht auf einen Allgemeinaufruf erzwingt, wenn der entsprechende Zählwert eine vorbestimmte Schwelle erreicht, selbst wenn das Protokoll, welches durch den Modulationswahrscheinlichkeitsparameter definiert wird, eine zufällige Antwort erfordert.
